(19) Europäisches Patentamt

European Patent Office

Office européen des brevets

(11) Numéro de publication : **0 389 052 B1**

(12) **FASCICULE DE BREVET EUROPEEN**

(45) Date de publication du fascicule du brevet :
30.11.94 Bulletin 94/48

(51) Int. Cl.[5] : **G01S 7/52**

(21) Numéro de dépôt : **90200641.0**

(22) Date de dépôt : **19.03.90**

(54) Dispositif d'imagerie par échographie ultrasonore, utilisant un filtre adaptatif perfectionné.

(30) Priorité : **24.03.89 FR 8903931**

(43) Date de publication de la demande :
**26.09.90 Bulletin 90/39**

(45) Mention de la délivrance du brevet :
**30.11.94 Bulletin 94/48**

(84) Etats contractants désignés :
**DE FR GB**

(56) Documents cités :
**WO-A-86/03594**
**ULTRASONICS, vol. 10, no. 5, septembre 1972, pages 221-227, Guilford, Surrey,GB; G. KOSSOFF: "Improved techniques in ultrasonic cross sectional echography"**
**ACOUSTICAL IMAGING, PROCEEDINGS OF THE INTERNATIONAL SYMPOSIUM ON ACOUSTICAL IMAGING, vol. 15, 14-16 juillet 1986, pages 461-469, Plenum Press, New York,US;B.G.FROCK et al.: "Applications of digital image enhancement techniquesto the ultrasonic NDE of composite materials"**

(73) Titulaire : **LABORATOIRES D'ELECTRONIQUE PHILIPS**
**3, Avenue Descartes**
**F-94450 Limeil-Brévannes (FR)**
(84) **FR**
Titulaire : **N.V. Philips' Gloeilampenfabrieken**
**Groenewoudseweg 1**
**NL-5621 BA Eindhoven (NL)**
(84) **DE GB**

(72) Inventeur : **Collet-Bellon, Antoine**
**Societe Civile S.P.I.D.,**
**209 rue de L'Université**
**F-75007 Paris (FR)**

(74) Mandataire : **Pyronnet, Jacques et al**
**Société Civile S.P.I.D.**
**156, Boulevard Haussmann**
**F-75008 Paris (FR)**

## Description

La présente invention concerne un dispositif d'imagerie par échographie ultrasonore à deux dimensions, comportant un filtre adaptatif destiné à réduire le bruit d'interférence des images obtenues.

L'invention trouve une application particulièrement avantageuse dans le domaine de l'échographie médicale, et plus spécialement dans celui de la formation d'images d'organes.

Le problème technique général que doit résoudre tout dispositif d'imagerie par échographie ultrasonore consiste, le plus souvent, à obtenir une image aussi exacte que possible du milieu soumis à exploration, quant à ses contours et aux parois spéculaires qu'il contient.

Diverses solutions à ce problème technique général ont déjà été proposées par le passé. Citons, en particulier, l'article de M. Fink "Imagerie ultrasonore" paru dans le Journal de Physique Appliquée 18 (1983) p. 527-556, qui analyse de façon exhaustive les divers aspects de la formation échographique d'images. Toutes ces solutions connues de l'état de la technique, si elles conduisent à des résultats souvent satisfaisants, présentent pourtant certaines limites. En effet, la détermination des contours d'organes et la détection d'objets faiblement contrastés sont perturbées par les interférences constructives et destructives des échos produits par les nombreux diffuseurs contenus dans le milieu étudié, ceci en relation avec le caractère cohérent de l'onde ultrasonore émise par le transducteur piézoélectrique utilisé. Ce phénomène parasite est analogue, dans le domaine acoustique, à celui connu sous le nom de "speckle" dans le domaine optique et qui donne lieu aux "grains de lumière" que l'on rencontre souvent associés à l'émission laser. Les principaux inconvénients de ce bruit d'interférence dans le domaine ultrasonore sont, d'une part, une dégradation de la qualité des images échographiques, notamment une limitation de la visibilité en régime de faibles contrastes, et, d'autre part, une bande de fréquence large et une forte variance qui, par exemple, rendent inefficaces les procédés usuels de détection de contour.

Il est donc clair que la réduction du "speckle" est déterminante pour l'amélioration de la qualité des images échographiques. Dans ce but, différentes méthodes ont été envisagées :

- d'une part, celles qui consistent à traiter le signal avant acquisition, de façon à obtenir une décorrélation du "speckle", comme par exemple, la composition spatiale (voir l'article de C.B. Burkhardt, dans IEEE Trans. Sonics Ultrasonics, SU25 1-6 (1978)). Ces méthodes fournissent en général des images échographiques de bonne qualité. Elles présentent cependant l'inconvénient d'exiger un dispositif de traitement électronique complexe et onéreux. De plus, le temps d'acquisition est relativement long, ce qui est peu compatible avec la possibilité d'obtenir des images en temps réel. En effet, la mise en oeuvre de ces méthodes de traitement a priori connues nécessite d'augmenter le nombre d'informations acquises d'un facteur N, ce qui conduit en principe à un gain en contraste de $\sqrt{N}$.
- d'autre part, les méthodes de lissage après formation de l'image, comme, par exemple, l'utilisation d'un filtre passe-bas qui réduit effectivement les fluctuations dues au "speckle", mais introduit un flou dans les images en étalant les contours.

Une autre méthode connue de ce type consiste à utiliser un filtre dit adaptatif, dont un exemple est décrit dans la demande de brevet britannique GB-A-2 168 482 correspondant à la demande WO 86/03594. En échographie ultrasonore, les filtres adaptatifs fonctionnent conformément à un procédé selon lequel on détermine dans la région considérée de l'image un ou plusieurs paramètres statistiques qui est aussi la mesure d'une grandeur caractéristique du"speckle". Puis, après avoir estimé, à l'aide de cette grandeur caractéristique, le degré de similitude entre le signal à traiter et le bruit d'interférence, on filtre le signal d'une manière qui dépend du degré de similitude obtenu. Le filtre adaptatif joue, en quelque sorte, le rôle d'un filtre à bande passante variable :

dans une région où le traitement statistique montre que l'image est essentiellement constituée de "speckle", le filtre adaptatif fonctionne en filtre passe-bas, tandis que, à la traversée des parois spéculaires d'organes, par exemple, où le signal utile est beaucoup plus intense que le bruit d'interférence, il se comporte comme un filtre passe-tout qui préserve donc l'acuité des contours de l'image. Même si ce type de filtrage ne peut prétendre conduire à des résultats aussi bons que ceux obtenus par les méthodes du type composition spatiale, le contraste de l'image échographique est cependant nettement amélioré. Toutefois, le filtrage adaptatif présente un certain nombre d'inconvénients. D'abord, l'effet de "lissage" peut avoir pour conséquence de faire disparaître de l'image des petits objets. D'autre part, même si les contours de l'image sont préservés lors du filtrage, l'impression visuelle d'une telle image n'est pas très agréable, l'oeil appréciant la présence de composantes haute-fréquence, notamment pour pouvoir permettre une meilleure accomodation.

Aussi le problème technique à résoudre par l'objet de la présente invention est de proposer un dispositif d'imagerie par échographie ultrasonore à deux dimensions, comprenant un filtre adaptatif destiné à réduire le bruit d'interférence des images obtenues, dispositif grâce auquel il serait possible de restituer des détails significatifs que le filtrage adaptatif aurait fait disparaître, tout en améliorant la qualité visuelle de l'image.

La solution au problème technique posé consiste, selon la présente invention, en ce que ledit dispositif présente un circuit de différentiation pour fournir la dérivée du signal entrant dans ledit filtre adaptatif et un circuit de sommation pondérée du signal sortant du filtre adaptatif et du signal sortant dudit circuit de différentiation.

Ainsi, la dérivée non filtrée du signal entrant dans le filtre adaptatif ajoute au signal sortant dudit filtre les composantes haute-fréquence du bruit de "speckle", ce qui concourt à rendre l'image plus agréable à l'oeil. D'autre part, sur les contours de l'image, là où le signal varie plus vite, la dérivée prend une valeur appréciable, et, comme on le verra plus loin, cet effet, loin d'être néfaste, présente au contraire l'avantage de renforcer lesdits contours en donnant en plus à l'image finale une impression d'éclairement rasant. En outre, des détails noyés dans le signal peuvent de cette manière apparaître de façon plus perceptible.

Enfin, puisque dans un échographe les parois ne sont bien visibles que perpendiculairement à l'axe de propagation des ultrasons, il est prévu que le circuit de dérivation est un circuit de dérivation dans la direction dite axiale.

La description qui va suivre en regard des dessins annexés, donnés à titre d'exemples non limitatifs, fera bien comprendre en quoi consiste l'invention et comment elle peut être réalisée.

La figure 1 est un schéma, en forme de blocs-diagrammes, de la partie filtrage d'un dispositif d'imagerie selon l'invention.

La figure 2a représente un signal échographique comportant du bruit d'interférence, à l'entrée du filtre adaptatif.

La figure 2b représente un signal extrait du signal de la figure 2a après filtrage adaptatif.

La figure 2c donne le signal de la figure 2b auquel a été ajoutée la dérivée du signal 2a.

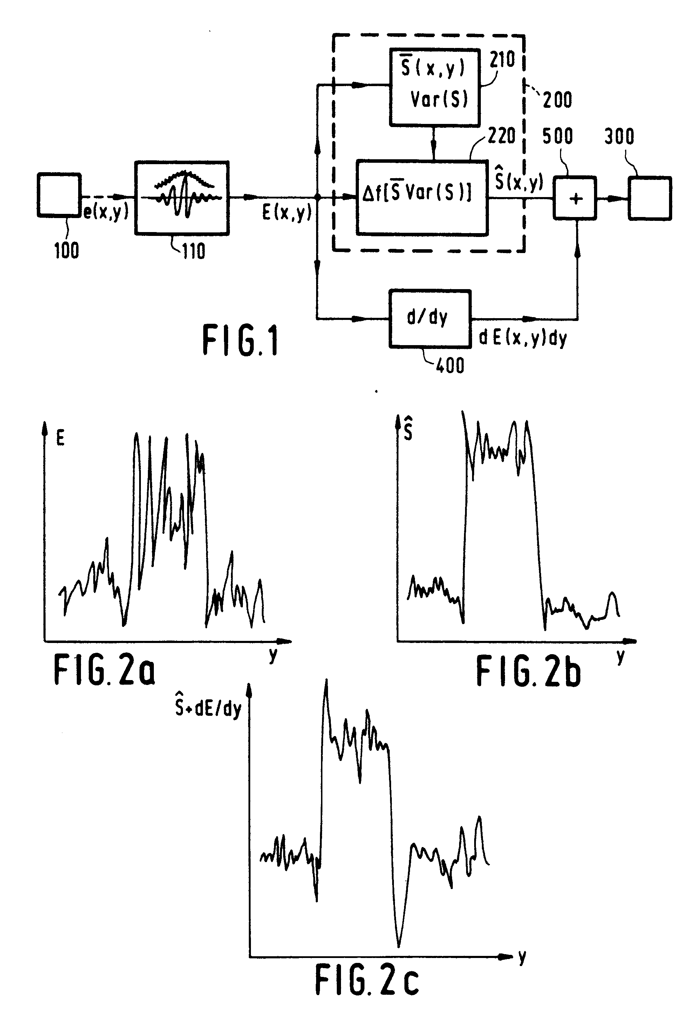

La figure 1 est le schéma d'un dispositif d'imagerie par échographie ultrasonore à deux dimensions x, y. Par la suite, x désigne la direction transverse à la direction de propagation, généralement appelée latérale, et y la direction dite axiale, c'est-à-dire parallèle à la direction de propagation, relativement à un faisceau ultrasonore d'exploration émis par une unité 100 d'émission-réception, non représentée, en détail mais comprenant, de façon classique, un transducteur piézoélectrique qui convertit en trains périodiques d'impulsions ultrasonores les signaux électriques d'excitation qu'il reçoit d'un étage d'émission. Un étage de réception fournit à sa sortie les signaux échographiques e(x,y) renvoyés vers le transducteur piézoélectrique par le milieu soumis à observation.

Comme le montre la figure 1, un détecteur 110 d'enveloppe donne du signal échographique e(x,y) délivré par l'unité 100 d'émission-réception un signal E(x,y) démodulé de la composante radio-fréquence, appelé enveloppe. L'exemple de signal enveloppe, le long de la direction axiale y, donné à la figure 2a fait apparaître la présence d'un bruit d'interférence important. De façon à réduire ce bruit de "speckle", l'enveloppe E(x,y) est traitée par un filtre adaptatif 200 dont le principe général est décrit en détail dans l'article "Adaptive Restoration of Images with Speckle" de D.T. Kuan et al, Transactions on acoustics, speech and signal processing, Vol. ASSP-35, No 3, March 1987, p. 373. En substance, le filtre adaptatif 200 est constitué d'un filtre 220 à bande passante variable dont la bande passante $\Delta f$ est fonction des valeurs estimées, par une unité 210 de traitement statistique, de paramètres statistiques tirés du signal enveloppe E(x,y), qui sont en général une valeur moyenne et une variance. Il est bien entendu que le résultat de filtrage obtenu dépend du modèle choisi pour le bruit d'interférence ainsi que de certaines hypothèses simplificatrices.

A titre d'exemple, la Demanderesse a étudié un filtre adaptatif particulier qui a comme point de départ la relation qui lie le signal s(x,y) exempt de bruit de "speckle" au signal enveloppe E(x,y) par la formule :

$$E(x,y) = \left| \sum_{x',y'} h(x,y;x',y')\, s(x',y') \exp[j\emptyset(x',y')] \right| \quad (1)$$

la fonction h étant la réponse impulsionnelle de l'échographe et $\emptyset$ une phase aléatoire. En prenant pour hypothèses que s(x,y) varie lentement par rapport à h, que les signaux d'enveloppe ne sont pas spatialement corrélés, que $\emptyset$ est une variable aléatoire uniformément distribuée entre $-\Pi$ et $\Pi$, le "speckle" se comporte comme un bruit multiplicatif et il est possible de calculer, par moyenne spatiale à l'intérieur d'une fenêtre F(x,y) centrée sur le point (x,y), la valeur moyenne $\overline{S}(x,y)$ et la variance var[S(x,y)] de l'intensité S(x,y) du signal s(x,y). Le résultat dépend fortement du choix de la fenêtre F (x,y). Compte-tenu du fait que la résolution axiale est en général meilleure que la résolution latérale, il y a avantage à prendre une fenêtre plus grande dans le sens latéral que dans le sens axial. On obtient également un meilleur résultat en faisant, non pas une moyenne simple à l'intérieur de la fenêtre, mais une moyenne pondérée favorisant les points situés au centre. Il est également nécessaire que les dimensions de la fenêtre varient en fonction des évolutions des résolutions axiale et transversale de l'échographe avec la profondeur.

A partir des valeurs de $\overline{S}(x,y)$ et Var$[S(x,y)]$ ainsi fournies par l'unité 210 de traitement statistique, la demanderesse a construit le filtre 220 à bande passante variable qui fournit l'estimée suivante, par les techniques classiques d'estimation linéaire en moyenne quadratique :

$$\hat{S}(x,y) = \overline{S}(x,y) + \frac{\mathrm{Var}[S(x,y)]}{2\mathrm{Var}[S(x,y)] + \overline{S}(x,y)} [E^2(x,y) - \overline{S}(x,y)]$$

On voit sur cette formule que lorsque la variance est faible, c'est-à-dire lorsque le signal est supposé ne contenir que du bruit de "speckle", $S(x,y)$ est égale à la valeur moyenne $\overline{S}(x,y)$ et le filtre adaptatif agit comme filtre passe-bas. Par contre, dans des régions de l'image de forte variance, par exemple aux transitions brusques correspondant aux contours d'organes, l'estimée $\hat{S}(x,y)$ vaut $\frac{1}{2}[E^2(x,y)+\overline{S}(x,y)]$, ce qui revient à ajouter à la valeur moyenne une partie du signal d'entrée non filtré.

La figure 2b montre l'effet de lissage obtenu en appliquant au signal de la figure 2a le filtre adaptatif défini ci-dessus. Il apparaît clairement que le signal ainsi filtré préserve les contours de l'image tout en étant pratiquement exempt de bruit d'interférence. Toutefois, comme on l'a déjà dit plus haut, la disparition de la plupart des hautes fréquences dans le signal de la figure 2b a le double inconvénient de ne pas être agréable à l'oeil et de faire disparaître des petits détails de l'image échographique. C'est pourquoi, comme le montre la figure 1, il est prévu un circuit 400 de dérivation du signal $E(x,y)$ entrant dans le filtre adaptatif. Dans le dispositif de la figure 1, le circuit 400 de dérivation est un circuit de dérivation dans la direction axiale y qui, de $E(x,y)$, donne approximativement la dérivée $dE(x,y)/dy$. Cette forme de dérivation est préférable puisque l'écho le plus important envoyé par les contours provient de la direction axiale. Puis, le signal sortant $\hat{S}(x,y)$ du filtre adaptatif 200 et le signal sortant du circuit 400 de dérivation sont additionnés par un circuit 500 de sommation pondérée qui permet d'ajouter le taux de haute fréquence désiré au signal filtré $\hat{S}(x,y)$. La figure 2c représente une superposition de l'estimée de la figure 2b et de la dérivée du signal initial $E(x,y)$ de la figure 2a. On constate sur la figure 2c un net renforcement des contours dans un sens positif ou dans un sens négatif qui produit un effet plaisant à l'oeil d'éclairage rasant.

De façon connue, le signal sortant du circuit 500 de sommation pondérée est traité par une unité 300 de visualisation comprenant, par exemple, un amplificateur de compression logarithmique, un dispositif de mémorisation et de conversion de balayage, et un dispositif de visualisation.

## Revendications

1. Dispositif d'imagerie par échographie ultrasonore à deux dimensions (x,y), comportant un filtre adaptatif (200) destiné à réduire le bruit d'interférence des images obtenues, caractérisé en ce que ledit dispositif présente un circuit (400) de différentiation pour fournir la dérivée du signal ($E(x,y)$) entrant dans ledit filtre adaptatif et un circuit (500) de sommation pondérée du signal sortant ($\hat{S}(x,y)$) du filtre adaptatif (200) et du signal sortant ($dE(x,y)/dy$) dudit circuit (400) de différentiation.

2. Dispositif d'imagerie par échographie ultrasonore selon la revendication 1, caractérisé en ce que le circuit (400) de différentiation est un circuit de dérivation dans la direction axiale (y) du faisceau d'exploration ultrasonore.

3. Dispositif d'imagerie par échographie ultrasonore selon l'une des revendications 1 ou 2 caractérisé en ce que, le signal $E(x,y)$ entrant dans le filtre adaptatif (200) étant l'enveloppe du signal échographique ($e(x,y)$) reçu, le signal sortant dudit filtre adaptatif est donné par :

$$\hat{S}(x,y) = \overline{S}(x,y) + \frac{\mathrm{Var}[S(x,y)]}{2\mathrm{Var}[S(x,y)] + \overline{S}(x,y)} [E^2(x,y) - \overline{S}(x,y)]$$

où Var$[S(x,y)]$ et $\overline{S}(x,y)$ sont la variance et la valeur moyenne, à l'intérieur d'une fenêtre ($F(x,y)$) donnée, d'un signal $S(x,y)$ représentant l'intensité d'un signal $s(x,y)$ déduit de l'enveloppe $E(x,y)$ par déconvolution statistique du bruit d'interférence.

## Patentansprüche

1. Vorrichtung zur Bilddarstellung mittels Ultraschall-Echographie in zwei Dimensionen (x,y) mit einem adaptiven Filter (200) zur Reduktion des Interferenzrauschens der erhaltenen Bilder, dadurch gekennzeichnet, daß die genannte Vorrichtung eine Differenzierschaltung (400) zur Lieferung der Ableitung des in das genannte Filter einlaufenden Signals ($E(x,y)$) umfaßt sowie eine Schaltung (500) zur gewichteten Summierung des das adaptive Filter (200) verlassenden Signals ($S(x,y)$) und des die genannte Differenzierschaltung (400) verlassenden Signals (dE(x,y)/dy).

2. Vorrichtung zur Bilddarstellung mittels Ultraschall-Echographie nach Anspruch 1, dadurch gekennzeichnet, daß die Differenzierschaltung (400) eine Schaltung zur Ableitungsbildung in axialer Richtung (y) der Ultraschalluntersuchungswelle ist.

3. Vorrichtung zur Bilddarstellung mittels Ultraschall-Echographie nach einem der Ansprüche 1 oder 2, dadurch gekennzeichnet, daß, wenn das in das adaptive Filter (200) einlaufende Signal E(x,y) das Hüllsignal des empfangenen Echographiesignals (e(x,y)) ist, das das genannte adaptive Filter verlassende Signal gegeben ist durch;

$$\hat{S}(x,y) = \overline{S}(x,y) - \frac{Var[S(x,y)]}{2Var[S(x,y)] + \overline{S}(x,y)} [E^2(x,y) - \overline{S}(x,y)]$$

wobei Var[S(x,y)] und $\overline{S}(x,y)$ innerhalb eines gegebenen Fensters (F(x,y)) die Varianz und der Mittelwert eines Signals S(x,y) sind, das die Intensität eines Signals s(x,y) des genannten Hüllsignals E(x,y) durch statistische Ent-Faltung des Interferenzrauschens darstellt.

## Claims

1. An ultrasonic echographic imaging device for two dimensions (x,y), comprising an adaptive filter (200) for reducing the interference noise in the images obtained, characterized in that said device comprises a differentiation circuit (400) for supplying the derivative of the signal (E(s,y)) entering said adaptive filter and a circuit (500) for forming the weighted sum of the signal ($\hat{S}(x, y)$) leaving the adaptive filter (200) and of the signal (dE(x, y)/dy) output by said differentiating circuit (400).

2. An ultrasonic echographic imaging device as claimed in Claim 1, characterized in that the differentiating circuit (400) is a circuit for obtaining the derivative in the axial direction (y) of the ultrasonic scanning beam.

3. An ultrasonic echographic imaging device as claimed in any one of the Claims 1 or 2, characterized in that the signal E(x, y) entering the adaptive filter (200) being the envelope of the echographic signal (e(x, y)) received, the output signal of said adaptive filter is given by:

$$\hat{S}(x,y) = \bar{S}(x\ y) + [E^2(x,y) - \bar{S}(x,y)] \frac{Var[S(x,y)]}{2Var[S(x,y)] + \bar{S}(x,y)}$$

where Var(S(x,y)) and $\overline{S}(x,y)$ are the variance and the mean value, within a given window (F(x,y)), of a signal S(x,y) which represents the intensity of a signal s(x,y) derived from the envelope E(x,y) by statistical deconvolution of the interference noise.

FIG.1

FIG.2a

FIG.2b

FIG.2c